# EUROPÄISCHE PATENTSCHRIFT

(11) **EP 1 048 537 B1**
(45) Veröffentlichungstag und Bekanntmachung des Hinweises auf die Patenterteilung: **15.06.2005**
(21) Anmeldenummer: 00107282.6
(22) Anmeldetag: 04.04.2000
(51) Int. Cl.: B60S 1/52, B60S 1/60, B60Q 1/00

(54) **Lichteinheit für Fahrzeuge**
Lighting unit for vehicles
Unité d'éclairage pour véhicules

(30) Priorität: 26.04.1999 DE 19918806
(43) Veröffentlichungstag der Anmeldung: 02.11.2000
(73) Patentinhaber: Hella KGaA Hueck & Co., 59552 Lippstadt (DE)
(72) Erfinder: Böckeler, Franz-Josef, 59494 Soest (DE); Borgert, Hubertus, 59555 Lippstadt (DE); Brummel, Reinhold, 59609 Anröchte (DE); Dikau, Reinhold, 33104 Paderborn (DE); Heitjohann, Peter, 33378 Wiedenbrück (DE); Knaup, Wilhelm, 33165 Holtheim (DE); Röbbeke, Hubertus, 59597 Erwitte (DE); Schulte, Jürgen, 33142 Büren (DE); Spork, Heinz-Uwe, 33154 Salzkotten (DE); Urbschat, Ulrich, 59510 Lippetal-Lippborg (DE)

(56) Entgegenhaltungen:
- EP-A- 0 743 232
- DE-A- 4 244 453
- DE-A- 4 439 445

## Beschreibung

Die Erfindung betrifft eine Lichteinheit für Fahrzeuge, insbesondere Scheinwerfer für Fahrzeuge, mit einer Reinigungseinrichtung für eine Lichtscheibe der Lichteinheit, mit einem mindestens ein Lichtmodul aufnehmenden Gehäuse, welches die Lichtscheibe und ein durch die Lichtscheibe abgeschlossenes Gehäuseteil aufweist, und mit einem durch das Innere des Gehäuses verlaufenden und in eine vordere Öffnung des Gehäuses eingreifenden langgestreckten Düsenträger der Reinigungseinrichtung.

Eine solche Lichteinheit für Fahrzeuge ist aus der DE 44 39 445 A1 bekannt geworden. Als Lichteinheit dient eine Heckleuchte mit mehreren Lichtmodulen. Die Lichtmodule sind zusammen mit einem Düsenträger einer Reinigungsvorrichtung in einem Gehäuse angeordnet. Das Gehäuse besteht aus einem topfförmigen Gehäuseteil und einer eine vordere Öffnung des Gehäuseteils dicht abdeckenden Lichtscheibe. Die Lichtmodule sind von schalenförmigen Reflektoren und den Reflektoren zugeordneten Lichtquellen gebildet. Der Düsenträger ist in einer separaten Kammer des Gehäuses angeordnet, welche gegenüber einer die Lichtmodule aufnehmenden Kammer dicht ausgeführt ist. Durch den Düsenträger ist eine Düse von einer inaktiven Stellung in eine aktive Stellung teleskopartig verstellbar. In der aktiven Stellung ragt der Düsenträger durch eine Lichtscheibenöffnung hindurch, und die Düse ist zur Lichtscheibe hin ausgerichtet. Die aus der Düse austretende Reinigungsflüssigkeit trifft auf die vordere Seite der Lichtscheibe auf und reinigt diese. In der inaktiven Stellung der Düse ist die Lichtscheibenöffnung von einem Deckel verschlossen, der von einem Düsenträger getragen ist. Der Düsenträger greift mit einem vorderen Abschnitt in eine Lichtscheibenöffnung ein, während mit seinem hinteren Abschnitt eine Zuleitung für die Reinigungsflüssigkeit verbunden ist. Die Zuleitung führt durch eine hintere Öffnung des Gehäuses dicht hindurch. In die hintere Öffnung ist eine ringförmige Dichtung eingesetzt. Hierbei ist es nachteilig, daß der Düsenträger zusammen mit dem Lichtmodul in das Gehäuse eingesetzt und bei einer Demontage des Düsenträgers das Gehäuses der Lichteinheit geöffnet werden muß. Die Montage der Düsenträger ist umständlich und zeitaufwendig, da die Zuleitung für die Reinigungsflüssigkeit im Inneren des Gehäuses mit dem Düsenträger zu verbinden ist und beim Aufsetzen der Lichtscheibe auf das Gehäuseteil der vordere Abschnitt des Düsenträgers in die Lichtscheibenöffnung einzufädeln ist.

Aus der DE 42 44 453 A1 ist eine Lichteinheit für Fahrzeuge bekannt geworden, bei der eine zylindrische Aufnahme für den Düsenträger einstückig mit der Lichtscheibe ausgeführt ist. Die zylindrische Aufnahme erstreckt sich durch das Innere des Gehäuses und greift mit ihrem freien Ende in eine hintere Öffnung des Gehäuses ein. Zwischen einem Randbereich der hinteren Öffnung und der zylindrischen Aufnahme ist umlaufend eine Dichtung angeordnet. Der Düsenträger ist von der Vorderseite der Lichtscheibe her durch eine Lichtscheibenöffnung hindurch in die zylindrische Aufnahme eingeschoben. Hierbei ist zwar eine nachträgliche Montage und Demontage möglich, jedoch muß die zylindrische Aufnahme bei tiefen Gehäusen entsprechend lang ausgeführt sein und kann somit bei der Montage der Lichtscheibe und einer Zwischenlagerung der Lichtscheibe leicht beschädigt werden. Außerdem ist bei der Herstellung der Lichtscheibe ein Entformen der zylindrischen Aufnahme nicht möglich, wenn die zylindrische Aufnahme schräg zur Entformungsrichtung der Lichtscheibe verläuft.

Aufgabe der Erfindung ist es, die im Oberbegriff des Anspruchs 1 beschriebene Lichteinheit für Fahrzeuge derart zu gestalten, daß der Düsenträger bei zusammengebauter Lichteinheit montierbar und demontierbar ist und dies auch möglich ist, wenn das aus Lichtscheibe und Gehäuseteil bestehende Gehäuse für den Düsenträger keinen Einbauraum aufweisen muß, der gegenüber dem Inneren des Gehäuses dicht ausgeführt ist. Diese Aufgabe wird nach der Erfindung dadurch gelöst, daß in das Gehäuseteil der Lichteinheit eine hintere Öffnung eingebracht ist, durch welche hindurch der Düsenträger mit einem vorderen Abschnitt in das Innere des Gehäuses einschiebbar ist und in welcher der Düsenträger mit einem Abschnitt angeordnet ist, wobei der Düsenträger an einer nach hinten gerichteten Anschlagfläche des Gehäuses anliegt und zwischen dem Düsenträger und einem Randbereich der vorderen und hinteren Öffnung jeweils eine Dichtung umlaufend angeordnet ist. Der Düsenträger kann sogar erst nach einem Einbau der Lichteinheit in ein Fahrzeug von der Rückseite der Lichteinheit her in das Gehäuse eingeschoben werden, bis er gegen eine Anschlagfläche des Gehäuses anschlägt. Anschließend ist auf der Rückseite des Gehäuses eine mit einem Flüssigkeitsbehälter verbundene Zuleitung leicht und schnell mit einem äußeren hinteren Abschnitt des Düsenträgers verbindbar.

Der Düsenträger nimmt eine genaue Lage zur Lichtscheibe ein, wenn der die vordere Öffnung des Gehäuses begrenzende Randbereich die nach hinten gerichtete Anschlagfläche für den zur Lichtscheibe hin gerichteten vorderen Abschnitt des Düsenträgers aufweist. Dadurch ist außerdem für den Anschlag kein zusätzlicher Raum notwendig.

Die Düse kann in ihrer Ruhetage versenkt in dem Gehäuse angeordnet sein, wenn die vordere Öffnung des Gehäuses von einem von der Lichtscheibe getragenen hohlen Aufnahmeteil gebildet ist, das, ausgehend von der Lichtscheibe, in das Innere des Gehäuses ragt und dessen hinterer Randbereich zur Aufnahme des vorderen Abschnitts des Düsenträgers dient. Dadurch ist es weiterhin möglich, die Düse von der Vorderseite der Lichtscheibe her mit dem Düsenträger zu verbinden.

Weiterhin ist es vorteilhaft, wenn das Aufnahmeteil einteilig mit der Lichtscheibe hergestellt ist. Das Aufnahmeteil kann an das Aufnahmeteil angeformt oder mit der Lichtscheibe durch Kleben oder Laserschweißen verbunden sein.

Besteht das Aufnahmeteil aus einem separaten Teil, so kann das Aufnahmeteil auch eine Form aufweisen, wegen welcher das Aufnahmeteil nur schwierig bzw. nicht zusammen mit der Lichtscheibe entformbar wäre. Bei einem separaten Aufnahmeteil ist es vorteilhaft, wenn dessen vorderer Randbereich in eine Lichtscheibenöffnung eingreift, zwischen der und dem vorderen Randbereich des Aufnahmeteils eine Dichtung umlaufend angeordnet ist, dessen in das Innere des Gehäuses gerichteten Seite eine Anschlagfläche für das Aufnahmeteil ist. Das Aufnahmeteil ist einfach und leicht zu montieren, und der Düsenträger hält das Aufnahmeteil gegen den Anschlag der Dichtung.

Die in der Lichtscheibenöffnung angeordnete Dichtung weist auf der nach außen gerichteten Seite eine Anschlagfläche für einen Deckel auf, welcher zusammen mit einer Düse von einem teleskopartig verstellbaren Düsenträger getragen ist und von einer inaktiven Stellung durch die Lichtscheibenöffnung hindurch in eine aktive Stellung verstellbar ist. Dadurch schlägt beim Fahren der Düse in ihre Ruhestellung der Deckel weich an der Dichtung an und kann nicht beschädigt werden.

Die Anschlagfläche des Gehäuses für den Düsenträger ist kostengünstig herstellbar, wenn das Aufnahmeteil an seiner Innenseite eine nach innen gerichtete Schulter aufweist, welche die Anschlagfläche des Gehäuses für den Düsenträger ist. Die Schulter kann umlaufend ausgeführt sein, und das Aufnahmeteil weist durch die Schulter eine hohe Steifigkeit auf.

Die Soll-Lage der Dichtung, welche zwischen dem vorderen Abschnitt des Düsenträgers und dem Randbereich der vorderen Öffnung des Gehäuses angeordnet ist, ist nach der Montage des Düsenträgers sicher, wenn die Dichtung umlaufend unter Vorspannung an der Mantelfläche des vorderen Abschnitts des Düsenträgers anliegt, wobei der vordere Abschnitt einen so kleinen Außendurchmesser aufweist, daß der vordere Abschnitt des Düsenträgers zusammen mit der von ihm getragenen Dichtung durch die hintere Öffnung des Gehäuses hindurchführbar ist und die Dichtung an einem zur Lichtscheibe hin gerichteten Anschlag des Düsenträgers anliegt. Hierbei ist die Dichtung vor der Montage des Düsenträgers auf den vorderen Abschnitt des Düsenträgers im Preßsitz aufzuschieben, bis die Dichtung an dem Anschlag des Düsenträgers anliegt. Danach ist der Düsenträger zusammen mit der Dichtung durch die hintere Öffnung des Gehäuses hindurchführbar, bis der Düsenträger mit der auf ihn aufgeschobenen Dichtung in die vordere Öffnung des Gehäuses eingreift.

Die in der Lichtscheibenöffnung und der hinteren Öffnung des Gehäuses angeordnete Dichtung ist ein einfach gestaltetes Formteil und sicher an dem Randbereich der Öffnungen gehalten, wenn die Dichtung für die Lichtscheibenöffnung und die hintere Öffnung des Gehäuses eine äußere umlaufende Nut aufweist, in die der Randbereich der Lichtscheibenöffnung bzw. der hinteren Öffnung eingreift. Eine solche Dichtung ist einfach zu montieren bzw. kann an den Randbereich der Lichtscheibenöffnung bzw. die hintere Öffnung des Gehäuses angeformt werden.

Bei einer besonders vorteilhaften Weiterbildung der Erfindung ist ein aus dem Gehäuse ragender hinterer Abschnitt des in das Innere des Gehäuses einschiebbaren Düsenträgers bzw. eine mit diesem Abschnitt verbundene Zuleitung durch einen Halter an dem Gehäuse bzw. an dem Trägerelement der Lichteinheit befestigbar. Der Halter ist nach einem Einschieben des Düsenträgers in das Gehäuse gut zugänglich und arretiert den Düsenträger in seiner Einschiebrichtung. Durch den Halter kann nicht nur der Düsenträger, sondern auch die Zuleitung für die Reinigungsflüssigkeit an dem Trägerelement der Lichteinheit befestigt werden.

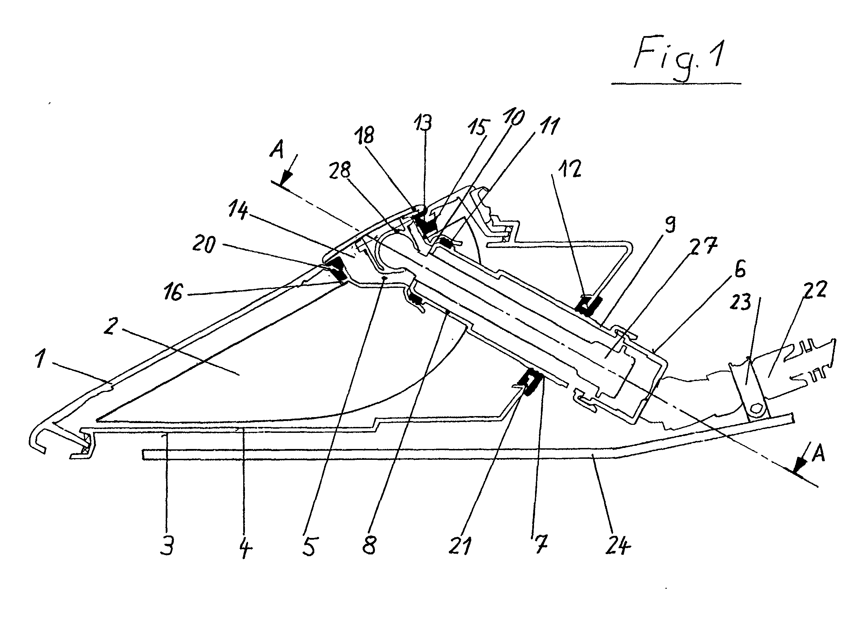

Zwei Ausführungsbeispiele nach der Erfindung sind in der Zeichnung dargestellt, und zwar zeigen
Figur 1 in einem vertikalen mittleren Längsschnitt eine Lichteinheit für Fahrzeuge mit einer Reinigungseinrichtung für die Lichtscheibe der Lichteinheit und
Figur 2 einen Schnitt nach der Linie A-A in Figur 1, während
Figur 3 in einem vertikalen mittleren Längsschnitt ein zweites Ausführungsbeispiel einer Lichteinheit für Fahrzeuge darstellt.

Die Lichteinheit für Fahrzeuge ist von einem Scheinwerfer gebildet, welcher mehrere Lichtmodule (2) aufweist. Das Gehäuse (3) des Scheinwerfers ist von einem aus Kunststoff bestehenden topfförmigen Gehäuseteil (4) und einer auf den vorderen Rand des Gehäuseteils (4) dicht aufgesetzten lichtdurchlässigen Lichtscheibe (1) gebildet. Das Gehäuseteil (4) und die Lichtscheibe (1) sind aus Kunststoff hergestellt. Als Lichtmodule (2) dienen schalenförmige Reflektoren, welche durch eine nicht dargestellte Einstellvorrichtung mindestens um eine Achse verstellbar sind. Die Reinigungseinrichtung weist einen Düsenträger (6) mit einer zylindrischen Gehäuseaufnahme (26) auf. Die zylindrische Gehäuseaufnahme (26) führt mit einem Abschnitt (9) durch eine hintere Öffnung (7) des Gehäuseteils (4) hindurch. Zwischen dem Abschnitt (9) der Gehäuseaufnahme (26) und einem Randbereich der hinteren Öffnung (7) des Gehäuses (4) ist eine aus einem Formteil bestehende ringförmige Dichtung (12) angeordnet. Die Dichtung (12) weist eine äußere umlaufende Nut (21) auf, in welche der Randbereich der hinteren Öffnung (7) des Gehäuseteils (4) eingreift. Ein vorderer Abschnitt (8) der Gehäuseaufnahme (26) weist am freien Ende eine im Preßsitz aufgesetzte ringförmige Dichtung (11) auf, welche an einem in Richtung der Lichtscheibe gerichteten Anschlag (25) der Gehäuseaufnahme (26) angrenzt. Der Außendurchmesser der Dichtung (11) ist kleiner als der Innendurchmesser (12) in die hintere Öffnung (7) des Gehäuses (3) eingesetzen Dichtung(12). Somit ist der Düsenträger (8) mit der Dichtung (11) durch die Dichtung (12) hindurchführbar. Der Düsenträger (6) greift mit der Dichtung (11) in einen Randbereich einer vorderen Öffnung (5) des Gehäuses (3) ein. Die vordere Öffnung (5) ist von einem hülsenförmigen, separaten Aufnahmeteil (13) gebildet, welches in eine Lichtscheibenöffnung (14) eingreift. In der Lichtscheibenöffnung (14) ist ebenfalls eine aus einem Formteil bestehende ringförmige Dichtung (15) angeordnet, welche mit einer äußeren Nut (20) versehen ist, in die der Randbereich der Lichtscheibenöffnung (12) eingreift. Das hülsenförmige Aufnahmeteil (13) weist einen äußeren umlaufenden Anschlag (16) auf, welcher an der zum Inneren des Gehäuses (3) gerichteten Seite der Dichtung (15) anliegt. Der Düsenträger (6) liegt mit seinem freien Ende an einer Anschlagfläche (10) des Aufnahmeteils (13) an. Die Anschlagfläche (10) ist von einer umlaufenden inneren Schulter des Aufnahmeteils (13) gebildet. Im Inneren des Aufnahmeteils ist eine Düse (19) angeordnet, welche aus der zylindrischen Gehäuseaufnahme (26) des Düsenträgers (6) teleskopartig herausfahrbar ist und von einem rohrförmigen Teil (27) getragen ist. Die Düse (19) ist von einem Deckel (18) abgedeckt, welcher über ein Halteelement (28) mit der Düse (19) verbunden ist und zusammen mit der Düse (19) von ihrer Ruhelage in eine aktive Stellung verstellbar ist. In der aktiven Stellung ragt das rohrförmige Teil (27) durch die Lichtscheibenöffnung (14) hindurch, und die Düse (19) ist auf die Lichtscheibe (1) gerichtet. Durch die aus der Düse (19) mit hohem Druck austretenden Wassertröpfchen wird die Lichtscheibe (1) gereinigt. Nach dem Einfahren der Düse (19) in das hülsenförmige Aufnahmeteil (13) liegt der Deckel (18) mit seinem äußeren umlaufenden Rand an der Anschlagfläche (17) an, welche von der nach außen gerichteten Seite der in der Lichtscheibenöffnung (14) angeordneten Dichtung (15) gebildet ist. Der aus der hinteren Öffnung (7) herausragende Abschnitt (9) des Düsenträgers (6) ist mit einer Zuleitung (22) für die Reinigungsflüssigkeit verbunden. Die Zuleitung (22) ist mit einem schellenartigen Halter (23) mit einem unterhalb des Scheinwerfers verlaufenden plattenförmigen Trägerelement (24) verbunden. Der Halter (23) arretiert den Düsenträger (6) in Einschubrichtung und stellt eine sichere Verbindung der Zuleitung (22) zum Düsenträger (6) her.

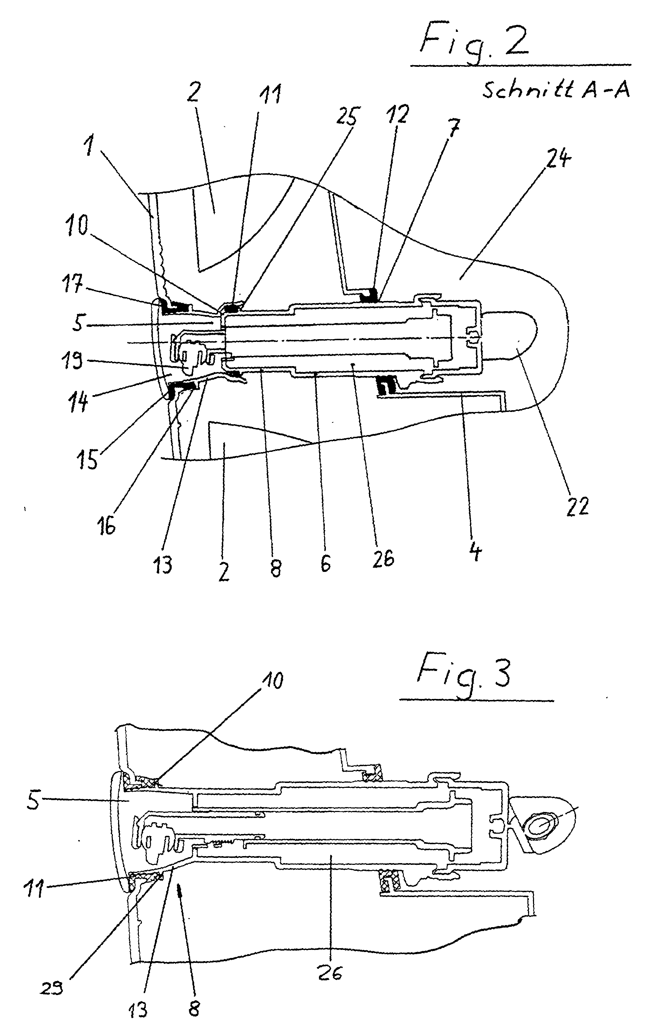

Bei der in Figur 3 dargestellten Lichteinheit ist das hohle Aufnahmeteil (13) einstückig mit der Gehäuseaufnahme (26) des Düsenträgers (6) ausgeführt und bildet somit den vorderen Abschnitt (8) des Düsenträgers (6). Als vordere Öffnung (5) des Gehäuses (3) dient eine Lichtscheibenöffnung, zwischen der und dem Aufnahmeteil (13) die Dichtung (11) verläuft. Die Dichtung (11) weist eine äußere umlaufende Nut auf in ein äußerer Randbereich der vorderen Öffnung (5) eingreift. Als Anschlagfläche (10) des Gehäuses (3) dient die dem Inneren des Gehäuses (3) zugewandte Seite der Dichtung (11). An der Anschlagfläche (10) liegt das Aufnahmeteil (13) mit einer umlaufenden äußeren Schulter (29) an.

### Bezugszeichenliste

### Lichteinheit für Fahrzeuge

- 1: Lichtscheibe
- 2: Lichtmodul
- 3: Gehäuse
- 4: Gehäuseteil
- 5: vordere Öffnung
- 6: Düsenträger
- 7: hintere Öffnung
- 8: vorderer Abschnitt
- 9: hinterer Abschnitt
- 10: Anschlagfläche
- 11: Dichtung
- 12: Dichtung
- 13: Aufnahmeteil
- 14: Lichtscheibenöffnung
- 15: Dichtung
- 16: Anschlagfläche
- 17: Anschlagfläche
- 18: Deckel
- 19: Düse
- 20: Nut
- 21: Nut
- 22: Zuleitung
- 23: Halter
- 24: Trägerelement
- 25: Anschlag
- 26: Gehäuseaufnahme
- 27: Teil
- 28: Halteelement

## Patentansprüche

1. Lichteinheit für Fahrzeuge, insbesondere Scheinwerfer für Kraftfahrzeuge, mit einer Reinigungseinrichtung für eine Lichtscheibe (1) der Lichteinheit, mit einem mindestens ein Lichtmodul (2) aufnehmenden Gehäuse (3), welches die Lichtscheibe (1) und ein durch die Lichtscheibe (1) abgeschlossenes Gehäuseteil (4) aufweist, und mit einem durch das Innere des Gehäuses (3) verlaufenden und in eine vordere Öffnung (5) des Gehäuses (3) eingreifenden langgestreckten Düsenträger (6) der Reinigungseinrichtung, **dadurch gekennzeichnet, daß** in das Gehäuseteil (4) der Lichteinheit eine hintere Öffnung (7) eingebracht ist, durch welche hindurch der Düsenträger (6) mit einem vorderen Abschnitt (8) in das Innere des Gehäuses (3) einschiebbar ist und in welcher der Düsenträger (6) mit einem Abschnitt (9) angeordnet ist, wobei der Düsenträger (6) an einer nach hinten gerichteten Anschlagfläche (10) des Gehäuses (3) anliegt und zwischen dem Düsenträger (6) und einem Randbereich der vorderen und hinteren Öffnung (5, 7) jeweils eine Dichtung (11 bzw. 12) umlaufend angeordnet ist.

2. Lichteinheit nach Anspruch 1, **dadurch gekennzeichnet, daß** der die vordere Öffnung (5) des Gehäuses (3) begrenzende Randbereich die nach hinten gerichtete Anschlagfläche (10) für den zur Lichtscheibe (1) hin gerichteten vorderen Abschnitt (8) des Düsenträgers (6) aufweist.

3. Lichteinheit nach Anspruch 1 oder 2, **dadurch gekennzeichnet, daß** die vordere Öffnung (5) des Gehäuses (3) von einem von der Lichtscheibe (1) getragenen hohlen Aufnahmeteil (13) gebildet ist, das, ausgehend von der Lichtscheibe (1), in das Innere des Gehäuses (3) ragt und dessen hinterer Randbereich zur Aufnahme des vorderen Abschnitts (8) des Düsenträgers (6) dient.

4. Lichteinheit nach Anspruch 3, **dadurch gekennzeichnet, daß** das Aufnahmeteil (13) einstückig mit der Lichtscheibe (1) verbunden ist.

5. Lichteinheit nach Anspruch 3, **dadurch gekennzeichnet, daß** das Aufnahmeteil (13) ein separates Teil ist, dessen vorderer Randbereich in eine Lichtscheibenöffnung (14) eingreift, zwischen der und dem vorderen Randbereich des Aufnahmeteils (13) eine Dichtung (15) umlaufend angeordnet ist.

6. Lichteinheit nach Anspruch 5, **dadurch gekennzeichnet, daß** die in der Lichtscheibenöffnung (14) angeordnete Dichtung (15) auf der in das Innere des Gehäuses (3) gerichteten Seite eine Anschlagfläche (16) für das Aufnahmeteil (13) aufweist.

7. Lichteinheit nach Anspruch 5 oder 6, **dadurch gekennzeichnet, daß** die in der Lichtscheibenöffnung (14) angeordnete Dichtung (15) auf der nach außen gerichteten Seite eine Anschlagfläche (17) für einen Deckel (18) aufweist, welcher zusammen mit einer Düse (19) von einem teleskopartig verstellbaren Düsenträger (6) getragen ist, wobei die Düse (19) von einer inaktiven Stellung durch die Lichtscheibenöffnung (14) hindurch in eine aktive Stellung verstellbar ist.

8. Lichteinheit nach einem der Ansprüche 3 bis 7, **dadurch gekennzeichnet, daß** das Aufnahmeteil (13) an seiner Innenseite eine nach innen gerichtete Schulter aufweist, welche die Anschlagfläche (10) des Gehäuses (4) für den Düsenträger (6) ist.

9. Lichteinheit nach einem der Ansprüche 1 bis 8, **dadurch gekennzeichnet, daß** die in der vorderen Öffnung (5) des Gehäuses (3) angeordnete Dichtung (11) umlaufend unter Vorspannung an der Mantelfläche des vorderen Abschnitts (8) des Düsenträgers (6) anliegt, wobei der vordere Abschnitt (8) einen so kleinen Außendurchmesser aufweist, daß der vordere Abschnitt (8) des Düsenträgers (6) zusammen mit der von ihm getragenen Dichtung (11) durch die hintere Öffnung (9) des Gehäuses (3) hindurchführbar ist und die Dichtung (11) an einem zur Lichtscheibe (1) hin gerichteten Anschlag (25) des Düsenträgers (6) angrenzt.

10. Lichteinheit nach einem der vorstehenden Ansprüche, **dadurch gekennzeichnet, daß** die in der Lichtscheibenöffnung (14) und der hinteren Öffnung (7) angeordnete Dichtung (15) eine äußere umlaufende Nut (20 bzw. 21) aufweist, in die der Randbereich der Lichtscheibenöffnung (14) bzw. der hinteren Öffnung (7) des Gehäuses (3) eingreift.

11. Lichteinheit nach einem der vorstehenden Ansprüche, **dadurch gekennzeichnet, daß** ein aus dem Gehäuse (4) ragender hinterer Abschnitt (9) des in das Innere des Gehäuses (3) einschiebbaren Düsenträgers (6) bzw. eine mit diesem Abschnitt (9) verbundene Zuleitung (22) durch einen Halter (23) an dem Gehäuse (3) bzw. an einem Trägerelement (24) der Lichteinheit befestigbar ist.

12. Lichteinheit nach einem der vorstehenden Ansprüche, **dadurch gekennzeichnet, daß** die vordere Öffnung des Gehäuses (3) von einer in die Lichscheibe (1) eingebrachten Öffnung gebildet ist, in die der Düsenträger (6) mit seinem voderen Abschnitt (8) eingreift.

13. Lichteinheit nach Anspruch 12, **dadurch gekennzeichnet, daß** der vordere Abschnitt (8) des Düsenträgers (6) von einem fest mit dem Düsenträger (6) verbundenen hohlen Aufnahmeteil (13) für die Düse (19) gebildet ist.

## Claims

1. Lighting unit for vehicles, in particular headlamps for motor vehicles, having a cleaning device for a lamp screen (1) of the lighting unit, with a housing (3) accommodating at least one light module (2) having the lamp screen (1) and a housing member (4) sealed by the lamp screen (1) and with an elongated nozzle carrier (6) of the cleaning device running through the interior of the housing (3) and engaging in a forward opening (5) of the housing (3), **characterised in that** introduced into the housing member (4) of the lighting unit is a rearward opening (7), through which the nozzle carrier (6) may be inserted with a forward section (8) into the interior of the housing (3) and in which the nozzle carrier (6) is arranged with a section (9), whereby the nozzle carrier (6) lies against a rearwardly directed stop surface (10) of the housing (3) and between the nozzle carrier (6) and an edge region of the forward and rear opening (5, 7), in each case, a seal (11 or 12) is arranged peripherally.

2. Lighting unit according to claim 1, **characterised in that** the edge region bordering the forward opening (5) of the housing (3) has the rearwardly directed stop surface (10) for the forward section (8) of the nozzle carrier (6) directed towards the lamp screen (1).

3. Lighting unit according to claim 1 or 2, **characterised in that** the forward opening (5) of the housing (3) comprises a hollow accommodating member (13) borne by the lamp screen (1) which, beginning from the lamp screen (1), projects into the interior of the housing (3) and whose rearward edge region serves to accommodate the forward section (8) of the nozzle carrier (6).

4. Lighting unit according to claim 3, **characterised in that** the accommodating member (13) is linked in one piece to the lamp screen (1).

5. Lighting unit according to claim 3, **characterised in that** the accommodating member (13) is a separate portion whose forward edge region engages in a lamp screen opening (14), between which opening and the forward edge region of the accommodating member (13) a seal (15) is arranged peripherally.

6. Lighting unit according to claim 5, **characterised in that** the seal (15) arranged in the lamp screen opening (14) has a stop surface (16) for the accommodating member (13) on the side directed into the interior of the housing (3).

7. Lighting unit according to claim 5 or 6, **characterised in that** the seal (15) arranged in the lamp screen opening (14) has a stop surface (17) for a cover (18) on the outwardly directed side, which is borne together with a nozzle (19) by a telescopically adjustable nozzle carrier (6), whereby the nozzle (19) is adjustable from an inactive position through the lamp screen opening (14) into an active position.

8. Lighting unit according to one of the claims 3 to 7, **characterised in that** the accommodating member (13) has on its internal side an inwardly directed shoulder which is the stop surface (10) of the housing (4) for the nozzle carrier (6).

9. Lighting unit according to one of the claims 1 to 8, **characterised in that** the seal (11) arranged in the forward opening (5) of the housing (3) lies peripherally under pretension against the jacket surface of the forward section (8) of the nozzle carrier (6), whereby the forward section (8) has a small external diameter such that the forward section (8) of the nozzle carrier (6) may be fed together with the seal (11) borne by it through the rearward opening (9) of the housing (3) and the seal (11) borders a stop (25) of the nozzle carrier (6) directed towards the lamp screen (1).

10. Lighting unit according to one of the previous claims, **characterised in that** the seal (15) arranged in the lamp screen opening (14) and the rearward opening (7) has an external peripheral groove (20 or 21), in which the edge region of the lamp screen opening (14) or of the rearward opening (7) of the housing (3) engages.

11. Lighting unit according to one of the previous claims, **characterised in that** a rearward section (9) projecting out of the housing (4) of the nozzle carrier (6) insertable into the interior of the housing (3) or an infeed (22) linked to this section (9) may be fixed by a holder (23) to the housing (3) or to a carrier element (24) of the lighting unit.

12. Lighting unit according to one of the previous claims, **characterised in that** the forward opening of the housing (3) comprises an opening introduced into the lamp screen (1) in which the nozzle holder (6) engages with its forward section (8).

13. Lighting unit according to claim 12, **characterised in that** the forward section (8) of the nozzle carrier (6) comprises a hollow accommodating member (13) firmly linked to the nozzle carrier (6) for the nozzle (19).

## Revendications

1. Unité d'éclairage pour véhicules, en particulier phare pour véhicules, comportant un dispositif de nettoyage pour une plaque d'éclairement (1) de l'unité d'éclairage, comportant un boîtier (3) recevant au moins un module d'éclairage (2), qui présente la plaque d'éclairement (1) et une partie de boîtier (4) fermée par la plaque d'éclairement (1), et comportant un support de buse (6) allongé pour le dispositif de nettoyage, support qui s'étend à travers l'intérieur du boîtier (3) et s'engage dans une ouverture antérieure (5) du boîtier (3), **caractérisée en ce que** dans la partie de boîtier (4) de l'unité d'éclairage est ménagée une ouverture postérieure (7) à travers laquelle le support de buse (6) peut être enfilé avec un tronçon antérieur (8) jusqu'à l'intérieur du boîtier (3) et dans laquelle le support de buse (6) est agencé avec un tronçon (9), le support de buse (6) étant en appui sur une surface de butée (10) du boîtier (3), orientée vers l'arrière, et un joint (11, 12) étant agencé à la périphérie entre le support de buse (6) et une région de bord de l'ouverture antérieure (5) et de l'ouverture postérieure (7), respectivement.

2. Unité d'éclairage selon la revendication 1, **caractérisée en ce que** la région de bord limitant l'ouverture antérieure (5) du boîtier (3) présente la surface de butée (10) orientée vers l'arrière pour le tronçon antérieur (8), orienté vers la plaque d'éclairement (1), du support de buse (6).

3. Unité d'éclairage selon l'une ou l'autre des revendications 1 et 2, **caractérisée en ce que** l'ouverture antérieure (5) du boîtier (3) est formée par une pièce de réception (13) creuse portée par la plaque d'éclairement (1), laquelle, partant de la plaque d'éclairement (1), fait saillie dans l'intérieur du boîtier (3) et dont la région de bord postérieure sert à recevoir le tronçon antérieur (8) du support de buse (6).

4. Unité d'éclairage selon la revendication 3, **caractérisée en ce que** la pièce de réception (13) est reliée d'un seul tenant avec la plaque d'éclairement (1).

5. Unité d'éclairage selon la revendication 3, **caractérisée en ce que** la pièce de réception (13) est une pièce séparée dont la région de bord antérieure s'engage dans une ouverture de plaque d'éclairement (14), un joint (15) étant agencé à la périphérie entre ladite ouverture et la région de bord antérieure de la pièce de réception (13).

6. Unité d'éclairage selon la revendication 5, **caractérisée en ce que** le joint (15) agencé dans l'ouverture de plaque d'éclairement (14) présente, sur le côté orienté vers l'intérieur du boîtier (3), une surface de butée (16) pour la pièce de réception (13).

7. Unité d'éclairage selon l'une ou l'autre des revendications 5 et 6, **caractérisée en ce que** le joint (15) agencé dans l'ouverture de plaque d'éclairement (14) présente, sur le côté orienté vers l'extérieur, une surface de butée (17) pour un couvercle (18) qui est porté conjointement avec une buse (19) par un support de buse (6) réglable de manière télescopique, la buse (19) pouvant être déplacée depuis une position inactive en traversant l'ouverture de plaque d'éclairement (14) jusque dans une position active.

8. Unité d'éclairage selon l'une des revendications 3 à 7, **caractérisée en ce que** la pièce de réception (13) présente sur sa face intérieure un épaulement orienté vers l'intérieur, qui constitue la surface de butée (10) du boîtier (4) pour le support de buse (6).

9. Unité d'éclairage selon l'une des revendications 1 à 8, **caractérisé en ce que** le joint (11) agencé dans l'ouverture antérieure (5) du boîtier (3) est en appui périphérique sous précontrainte sur la surface enveloppe du tronçon antérieur (8) du support de buse (6), le tronçon antérieur (8) présentant un diamètre extérieur si petit que le tronçon antérieur (8) du support de buse peut être introduit conjointement avec le joint (11) qu'il porte à travers l'ouverture postérieure (9) du boîtier (3), et le joint (11) est adjacent à une butée (25), orientée vers la plaque d'éclairement (1), du support de buse (6).

10. Unité d'éclairage selon l'une des revendications précédentes, **caractérisée en ce que** le joint (15) agencé dans l'ouverture de plaque d'éclairement (14) et dans l'ouverture postérieure (7) présente une rainure (20, 21) extérieure périphérique respective, dans laquelle s'engage la région de bord de l'ouverture de plaque d'éclairement (14) et l'ouverture postérieure (7) du boîtier (3), respectivement.

11. Unité d'éclairage selon l'une des revendications précédentes, **caractérisée en ce qu'**un tronçon postérieur (9), faisant saillie hors du boîtier (4), du support de buse (6) susceptible d'être introduit à l'intérieur du boîtier (3) ou une conduite d'amenée (22) reliée à ce tronçon (9) peut être fixé(e) par une attache (23) sur le boîtier (3) ou sur un élément support (24) de l'unité d'éclairage.

12. Unité d'éclairage selon l'une des revendications précédentes, **caractérisée en ce que** l'ouverture antérieure du boîtier (3) est formée par une ouverture ménagée dans la plaque d'éclairement (1), dans laquelle le support de buse (6) s'engage avec son tronçon antérieur (8).

13. Unité d'éclairage selon la revendication 12, **caractérisée en ce que** le tronçon antérieur (8) du support de buse (6) est formé par une pièce de réception (13) creuse, pour la buse (19), qui est reliée de manière solidaire au support de buse (6).
